(19) Europäisches Patentamt / European Patent Office / Office européen des brevets

(11) **EP 2 306 679 A1**

(12) **EUROPEAN PATENT APPLICATION**

(43) Date of publication:
06.04.2011 Bulletin 2011/14

(51) Int Cl.:
*H04L 27/00* (2006.01)   *H04L 27/22* (2006.01)
*H04L 27/26* (2006.01)   *H04L 27/38* (2006.01)

(21) Application number: 10251716.6

(22) Date of filing: 01.10.2010

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 01.10.2009 US 572111

(71) Applicant: The DirecTV Group, Inc.
El Segundo, CA 90245 (US)

(72) Inventor: Zhou, Guangcai
Agoura Hills, California 91301 (US)

(74) Representative: Brunner, John Michael Owen
Carpmaels & Ransford
One Southampton Row
London
WC1B 5HA (GB)

(54) **Phase noise and frequency error resilient demodulatin scheme for MoCA**

(57)     Systems and methods for demodulating signals are disclosed. A system in accordance with the present invention comprises a frequency estimator, a tuner, coupled to the frequency estimator, for tuning to a frequency based on an estimate from the frequency estimator, a phase offset estimator for determining an average phase offset, and a demodulator, coupled to the tuner and the phase offset estimator, for demodulating the plurality of symbols, wherein the demodulator corrects a phase offset for a given symbol in the plurality of the symbols based on the average phase offset of symbols prior to the given symbol.

```
┌──────────────────────────────────────────────┐
│  ESTIMATING A FREQUENCY OFFSET OF THE          │──── 1000
│  CHANNEL BASED ON A HEADER OF A DATA FRAME     │
└──────────────────────────────────────────────┘
                      │
                      ▼
┌──────────────────────────────────────────────┐
│  ESTIMATING A CHANNEL IN THE MULTIMEDIA        │──── 1002
│  SYSTEM BEING USED TO TRANSMIT DATA            │
└──────────────────────────────────────────────┘
                      │
                      ▼
┌──────────────────────────────────────────────┐
│  CORRECTING A PHASE OFFSET OF EACH SYMBOL OF   │
│  THE DATA BY AVERAGING A PHASE ERROR OF PRIOR  │
│  SYMBOLS IN THE DATA FRAME, WHEREIN THE PHASE  │──── 1004
│  ERROR IS DETERMINED BY AVERAGING THE ABSOLUTE │
│  VALUE OF A DIFFERENCE BETWEEN AN EXPECTED     │
│  PHASE OF EACH PRIOR SYMBOL IN THE DATA FRAME  │
│  AND A RECEIVED PHASE OF EACH PRIOR SYMBOL IN  │
│  THE DATA FRAME                                │
└──────────────────────────────────────────────┘
```

**FIG. 10**

EP 2 306 679 A1

## Description

BACKGROUND OF THE INVENTION

1. Field of the Invention.

The present invention relates generally to a satellite signal delivery system, and in particular, to a phase noise and frequency error resilient demodulation scheme for a Multimedia over Coax Alliance (MoCA) distribution system inside a house.

2. Description of the Related Art.

Satellite broadcasting of communications signals has become commonplace. Satellite distribution of commercial signals for use in television programming currently utilizes multiple feedhorns on a single Outdoor Unit (ODU) which supply signals to up to eight IRDs on separate cables from a multiswitch.

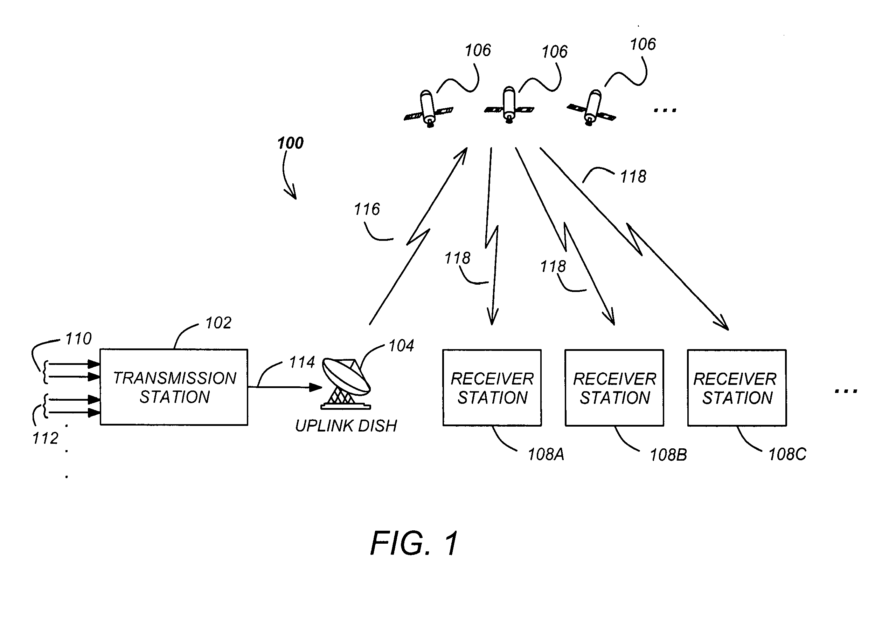

FIG. 1 illustrates a typical satellite television system of the related art.

FIG. 1 shows a communications system, specifically a television broadcasting system 100, which transmits and receives audio, video, and data signals via satellite. Although the present invention is described in the context of a satellite-based television broadcasting system, the techniques described herein are equally applicable to other methods of program content delivery, such as terrestrial over-the-air systems, cable-based systems, and the Internet. Further, while the present invention will be described primarily with respect to television content (i.e. audio and video content), the present invention can be practiced with a wide variety of program content material, including video content, audio content, audio and video related content (e.g., television viewer channels), or data content (e.g., computer data).

Television broadcasting system 100 includes transmission station 102, uplink dish 104, at least one satellite 106, and receiver stations 108A-108C (collectively referred to as receiver stations 108). Transmission station 102 includes a plurality of inputs 110 for receiving various signals, such as analog television signals, digital television signals, video tape signals, original programming signals and computer generated signals containing HTML content. Additionally, inputs 110 receive signals from digital video servers having hard discs or other digital storage media. Transmission station 102 also includes a plurality of timing inputs 112, which provide electronic schedule information about the timing and content of various television channels, such as that found in television schedules contained in newspapers and television guides. Transmission station 102 converts the data from timing inputs 112 into program guide data. Program guide data may also be manually entered at the site of transmission station 102. The program guide data consists of a plurality of "objects". The program guide data objects include data for constructing an electronic program guide that is ultimately displayed on a user's television.

Transmission station 102 receives and processes the various input signals received on inputs 110 and timing inputs 112, converts the received signals into a standard form, combines the standard signals into a single output data stream 114, and continuously sends output data stream 114 to uplink dish 104. Output data stream 114 is a digital data stream that is typically compressed using MPEG2/MPEG4 encoding, although other compression schemes may be used.

The digital data in output data stream 114 are divided into a plurality of packets, with each such packet marked with a Service Channel Identification (SCID) number. The SCIDs can be used by a receiver in receiver station 108 to identify the packets that correspond to each television channel. Error correction data is also included in output data stream 114.

Output data stream 114 is typically a multiplexed signal that is modulated by transmission station 102 using standard frequency and polarization modulation techniques. Output data stream 114 preferably includes a plurality of frequency bands, typically sixteen frequency bands, with each frequency band being either left polarized or right polarized. Alternatively, vertical and horizontal polarizations may be used.

Uplink dish 104 continuously receives output data stream 114 from transmission station 102, amplifies the received signal and transmits signal 116 to at least one satellite 106. Although a single uplink dish 104 and three satellites 106 are shown in FIG. 1, multiple uplink dishes 104 and a larger number of satellites 106 are preferably used to provide additional bandwidth, and to help ensure continuous delivery of signals 114 to receiver stations 108.

Satellites 106 revolve in geosynchronous orbit about the earth. Satellites 106 each include a plurality of transponders that receive signals 116 transmitted by uplink dish 104, amplify the received signals 116, frequency shift the received signals 116 to different frequency bands, and then transmit the amplified, frequency shifted signals 118 back to desired geographic areas on the Earth, where receiver stations 108 are located or will be located at some time in the future. Receiver stations 108 then receive and process the signals 118 transmitted by satellites 106.

Each satellite 106 typically broadcasts signals 118 in thirty-two (32) different frequencies, which are licensed to various users for broadcasting of programming, which can be audio, video, or data signals, or any combination. These signals are typically located in the Ku-band of frequencies, i.e., 11-18 GHz, but can be broadcast in the Ka-band of frequencies, i.e., 18-40 GHz, more typically in the 20-30 GHz range, or other frequency bands.

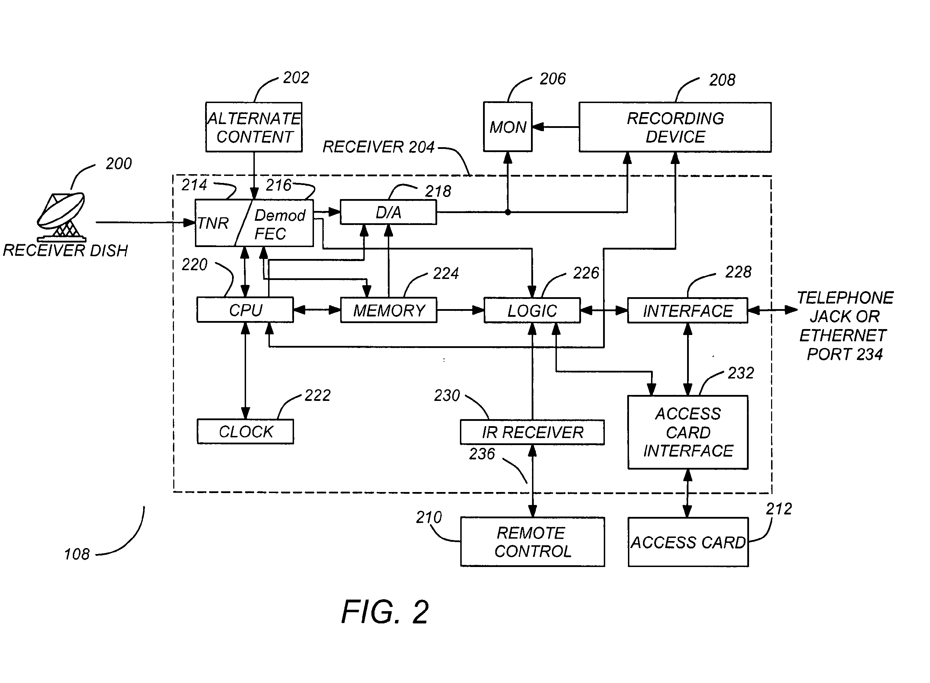

FIG. 2 is a block diagram of one of receiver stations 108, which receives and decodes audio, video and data signals. Typically, receiver station 108 is a "set top box," also known as an Integrated Receiver Decoder (IRD), which is usually resident in a home or multi-dwelling unit, for reception of satellite broadcasted television signals 118.

Receiver dish 200 can be an Outdoor Unit (ODU), which is usually a smaller dish antenna mounted on a home or multi-dwelling unit. However, receiver dish 200 can also be a larger ground-mounted antenna dish if desired.

Receiver dish 200 typically uses a reflector dish and feedhorn assembly to receive and direct downlink signals 118 to receiver station 108 via a wire or coaxial cable. Each receiver station has a dedicated cable that allows receiver dish 200, via a multiswitch, to selectively direct downlink signals 118 to receiver station 108, and allows receiver station 108 to determine which of the signals 118 is desired.

Receiver station 108 includes receiver dish 200, alternate content source 202, receiver 204, monitor 206, recording device 208, remote control 210 and access card 212. Receiver 204 includes tuner 214/demodulator/Forward Error Correction (FEC) decoder 216, digital-to-analog (D/A) converter 218, CPU 220, clock 222, memory 224, logic circuit 226, interface 228, infrared (IR) receiver 230 and access card interface 232. Receiver dish 200 receives signals 118 sent by satellites 106, amplifies the signals 118 and passes the signals 118 on to tuner 214. Tuner 214 and demodulator/FEC decoder 216 operate under control of CPU 220.

The CPU 220 operates under control of an operating system stored in the memory 224 or within an auxiliary memory within the CPU 220. The functions performed by CPU 220 are controlled by one or more control programs or applications stored in memory 224. Operating system and applications are comprised of instructions which, when read and executed by the CPU 220, cause the receiver 204 to perform the functions and steps necessary to implement and/or use the present invention, typically, by accessing and manipulating data stored in the memory 224. Instructions implementing such applications are tangibly embodied in a computer-readable medium, such as the memory 224 or the access card 212. The CPU 220 may also communicate with other devices through interface 228 or the receiver dish 200 to accept commands or instructions to be stored in the memory 224, thereby making a computer program product or article of manufacture according to the invention. As such, the terms "article of manufacture," "program storage device" and "computer program product" as used herein are intended to encompass any application accessible by the CPU 220 from any computer readable device or media.

Memory 224 and access card 212 store a variety of parameters for receiver 204, such as a list of channels receiver 204 is authorized to process and generate displays for; the zip code and area code for the area in which receiver 204 is used; the model name or number of receiver 204;.a serial number of receiver 204; a serial number of access card 212; the name, address and phone number of the owner of receiver 204; and the name of the manufacturer of receiver 204.

Access card 212 is removable from receiver 204 (as shown in FIG. 2). When inserted into receiver 204, access card 212 is coupled to access card interface 232, which communicates via interface 228 to a customer service center (not pictured). Access card 212 receives access authorization information from the customer service center based on a user's particular account information. In addition, access card 212 and the customer service center communicate regarding billing and ordering of services.

Clock 222 provides the current local time to CPU 220. Interface 228 is preferably coupled to a telephone jack or ethernet port 234 at the site of receiver station 108. Interface 228 allows receiver 204 to communicate with transmission station 102 as shown in FIG. 1 via telephone jack 234. Interface 228 may also be used to transfer data to and from a network, such as the Internet.

The signals sent from receiver dish 200 to tuner 214 are a plurality of modulated Radio Frequency (RF) signals. The desired RF signal is then downconverted to baseband by the tuner 214, which also generates in-phase and quadrature-phase (I and Q) signals. These two signals are then passed to the demodulator/FEC Application Specific Integrated Circuit (ASIC) 216. The demodulator 216 ASIC then demodulates the I and Q signals, and the FEC decoder correctly identifies each transmitted symbol. The received symbols for Quaternary Phase Shift Keying (QPSK) or 8PSK signals carry two or three data bits, respectively. The corrected symbols are translated into data bits, which in turn are assembled in to payload data bytes, and ultimately into data packets. The data packets may carry 130 data bytes or 188 bytes (187 data bytes and 1 sync byte).

In addition to the digital satellite signals received by receiver dish 200, other sources of television content are also preferably used. For example, alternate content source 202 provides additional television content to monitor 206. Alternate content source 202 is coupled to tuner 214. Alternate content source 202 can be an antenna for receiving off the air signals National Television Standards Committee (NTSC) signals, a cable for receiving American Television Standards Committee (ATSC) signals, or other content source. Although only one alternate content source 202 is shown, multiple sources can be used.

Initially, as data enters receiver 204, CPU 220 looks for initialization data which is referred to commonly in the industry as a boot object. A boot object identifies the SCIDs where all other program guide objects can be found. Boot objects are always transmitted with the same SCID, so CPU 220 knows that it must look for packets marked with that SCID. The information from the boot object is used by CPU 220 to identify packets of program guide data and route them to memory 224.

Remote control 210 emits Infrared (IR) signals 236 that are received by infrared receiver 230 in receiver 204. Other types of data entry devices may alternatively be used, by way of example and not limitation, such as an ultra-high frequency (UHF) remote control, a keypad on receiver 204, a remote keyboard and a remote mouse. When a user requests the display of a program guide by pressing the "guide" button on remote control 210, a guide request signal is received by IR receiver 230 and transmitted to logic circuit 226. Logic circuit 226 informs CPU 220 of the guide request. In response to the guide request, CPU 220 causes memory 224 to transfer a program guide digital image to D/A converter 218. D/A converter 218 converts the program guide digital image into a standard analog television signal, which is then transmitted to monitor 206. Monitor 206 then displays the TV video and audio signals. Monitor 206 may alternatively be a digital television, in which case no digital to analog conversion in receiver 204 is necessary.

Users interact with the electronic program guide using remote control 210. Examples of user interactions include selecting a particular channel or requesting additional guide information. When a user selects a channel using remote control 210, IR receiver 230 relays the user's selection to logic circuit 226, which then passes the selection on to memory 224 where it is accessed by CPU 220. CPU 220 performs an MPEG2 decoding step on received audio, video, and other packets from FEC decoder 216 and outputs the audio and video signals for the selected channel to D/A converter 218. D/A converter 218 converts the digital signals to analog signals, and outputs the analog signals to monitor 206.

As the number of satellites 106 increases, the number of programming choices increases. Further, as users add additional television monitors 206 to a home, each monitor 206 requires, in the related art system 200, a dedicated cable from receiver 204 to receiver dish 200, for control and delivery of downlink signals 118. This creates difficulties for users in terms of running additional cables and adding possibly unnecessary receiver 204 hardware in a given receiver station 108 installation.

The MoCA system can be considered as an extension of the in-home distribution services. It uses available cable wiring in a house and transports video/audio data, contents data and other data to specified in-home devices such as a server IRD, a client IRD, computers, and Ethernet routers. As the size and speed of the data delivery among system 200 and other devices increase, and other devices are sending information on cables that are interconnected to the system 200, there may be interference with the delivery of such information to and from receivers 204. As the size and speed of the data delivery in system 200 for MoCA devices increases, the ability of the MoCA system to deliver that data reliably and accurately will be overwhelmed.

It can be seen, then, that there is a need in the art for a more intelligent and efficient MoCA based data delivery system.

SUMMARY OF THE INVENTION

To minimize the limitations in the prior art, and to minimize other limitations that will become apparent upon reading and understanding the present specification, the present invention discloses systems and methods for demodulating signals. A system in accordance with the present invention comprises a frequency estimator, a tuner, coupled to the frequency estimator, for tuning to a frequency based on an estimate from the frequency estimator, a phase offset estimator for determining an average phase offset, and a demodulator, coupled to the tuner and the phase offset estimator, for demodulating the plurality of symbols, wherein the demodulator corrects a phase offset for a given symbol in the plurality of the symbols based on the average phase offset of symbols prior to the given symbol.

Such a system further optionally comprises the system being a Multimedia over Coax Alliance (MoCA) system, the signal being modulated from a Binary Phase Shift Keying (BPSK) to 1024 Quadrature Amplitude Modulation (1024 QAM), or a video signal, and a satellite broadcast system, wherein the satellite broadcast system transmits the signal.

A method for increasing data throughput of a multimedia system in accordance with one or more embodiments of the present invention comprises estimating a channel in the multimedia system being used to transmit data, estimating a frequency offset of the channel based on a header of a data frame, and correcting a phase offset of each symbol of the data by averaging a phase error of prior symbols in the data frame, wherein the phase error is determined by averaging the absolute value of a difference between an expected phase of each prior symbol in the data frame and a received phase of each prior symbol in the data frame.

Such a method further optionally comprises the multimedia system being a Multimedia over Coax Alliance (MoCA) system, the signal being a BPSK to 1024 Quadrature Amplitude Modulation (1024 QAM) signal, a video signal, and the multimedia system further comprising a satellite broadcast system, wherein the satellite broadcast system transmits the data.

Other features and advantages are inherent in the system and method claimed and disclosed or will become apparent to those skilled in the art from the following detailed description and its accompanying drawings.

BRIEF DESCRIPTION OF THE DRAWINGS

Referring now to the drawings in which like reference numbers represent corresponding parts throughout:

FIG. 1 illustrates a typical satellite system of the related art;
FIG. 2 illustrates a typical receiver of the related art;

FIG. 3 illustrates a system diagram of the present invention;

FIG. 4 illustrates demodulation of a constellation of a MAC frame without phase tracking;

FIG. 5 illustrates demodulation of a constellation of a MAC frame with phase tracking and correction in accordance with one or more embodiments of the present invention;

FIG. 6 illustrates the frequency domain phase trajectory in accordance with one or more embodiments of the present invention;

FIG. 7 illustrates an error vector magnitude for individual tones with ACMT phase tracking in accordance with one or more embodiments of the present invention;

FIG. 8 illustrates an error vector magnitude for individual tones without ACMT phase tracking;

FIG. 9 illustrates a demodulator in accordance with one or more embodiments of the present invention; and

FIG. 10 is a process chart in accordance with one or more embodiments of the present invention.

## DETAILED DESCRIPTION OF PREFERRED EMBODIMENTS

In the following description, reference is made to the accompanying drawings which form a part hereof, and which show, by way of illustration, several embodiments of the present invention. It is understood that other embodiments may be utilized and structural changes may be made without departing from the scope of the present invention.

## System Overview

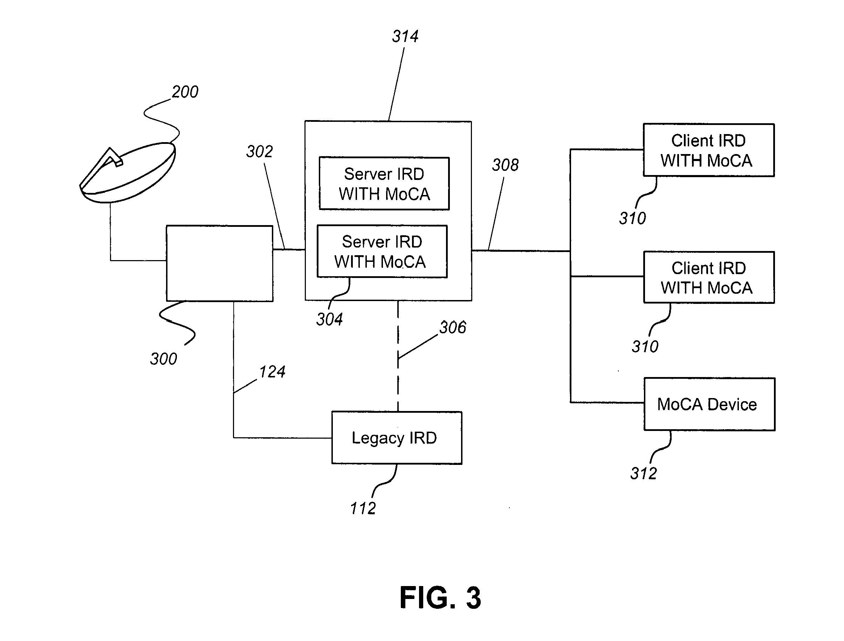

FIG. 3 illustrates a system diagram of the present invention.

In the present invention, ODU 108 is coupled to Frequency Translation Module (FTM) 300 (also known as Single Wire Multiswitch (SWM) 300). SWM 300 is coupled via cable 302 to Server IRD 304. SWM 300 is also coupled to legacy IRD 112 via cable 124, although, alternatively, Legacy IRD 112 can be coupled to Server IRD 304 via cable 306. Server IRD 308 is further coupled via cable 308 to Client IRDs 310 and other MoCA device(s) 312. There can be more than one server IRD 308 in a given location if desired. One or more server IRDs 304 are also called a "Home Media Center" (HMC) 314. All the non-legacy IRDs may have built-in MoCA devices or connected to MoCA dongle devices.

HMC 314 acts as a central location for recording, distribution, and scheduling of tasks and system resources for the present invention. HMC 314 allocates resources to client IRDs 310 as needed, depending on the client IRD 310 requests sent to HMC 314 via cable 308.

The two-way communication between HMC 314 and client IRD 310 takes place via cable 308. Further, other devices, e.g., stand-alone MoCA device 312, are connected to the cable 308, which is typically a coaxial cable.

The MoCA system is an open initiative promoting distribution of digital video and entertainment through existing coaxial cable(s) 308 in a home. MoCA technology provides the backbone for whole home entertainment networks of multiple wired and wireless products.

MoCA standard transmission schemes allow for the distribution of multiple HD video streams such as pay-per-view, VoD, multi-room gaming and whole-home DVR. However, as messages and signals become longer and more complex, the burst-style transmission of the MoCA schema becomes more difficult for individual MoCA devices (e.g., IRD 310, MoCA device 312) to properly receive and decode. Since MoCA operates in or near the spectrum accommodating CATV and DBS above 850 MHz, eliminating interference with other technologies, mediums, or consumer electronic devices, and with other signals on MoCA cable 308 itself, is essential to the integrity and performance of the system.

## Overview

The HMC 314 allows for Digital Video Recording functionality to every TV in house 110 without having a DVR present in every client IRD 310. The HMC 314 comprises one or more server IRDs 308 that act as a central hub. A Server IRD 308 receives and optionally records programming received from the satellite signals received by ODU 108. One or more client IRDs 310 connect to the HMC 314 via one or more cables 308 in order to receive audio, video and data and display these to a television monitor.

The HMC 314, via server IRD 304, is a high-definition (HD) receiver based on MPEG-2 or MPEG-4 transport streams, in addition to other proprietary formats used for legacy IRD 112. The HMC 314 also introduces Advanced Modulation/Coding (AMC), which includes Low Density Parity Check (LDPC) coding.

LDPC coding with advanced modulation is a forward-error-correcting (FEC) code technique that outperforms conventional convolutional FEC (Reed-Solomon/Viterbi) coding schemes. LDPC coding provides a more bandwidth-efficient way to improve the bit-error rate of digital signals. The advanced modulation also provides higher Phase Shift Key (PSK) modulations. In PSK modulation, the carrier signal is transmitted in different phases according to the bit mapping. With 8PSK, the number of phases is increased to eight to significantly increase the amount of information carried in the same bandwidth as a QPSK transmission.

MoCA data transmission currently uses BPSK to 256 QAM depending on the channel condition for each subcarrier (or tone), and it is desired to deliver data in up to 1024 QAM, or even higher modulation schemes in the future, such that the amount of information carried in the MoCA system can be increased. However, with increased modulation constellation density, using only frequency estimation of the MoCA channel is insufficient to allow the data to be properly demodulated at the demodulator 216 of IRD 304 or IRD 310.

The present invention is used to aid in the demodulation of MoCA signals on cable 308 at demodulators 216 in a given receiver (e.g., receiver 108) in a in-house MoCA network. The frequency estimation and phase estimation based on headers of MoCA frames can have some estimation errors. The estimation errors propagate when the Medium Access Control (MAC) frame size is long (e.g., more than 12000 bytes). The phase noise also introduces extra errors when many Adaptive Constellation Multi-Tone (ACMT) symbols are included in one MAC frame. The present invention combines MoCA channel frequency estimation with an decision directed phase tracking of each ACMT in one MAC frame together to achieve accurate phase estimation, so the frequency estimation error and phase noise impact can be significantly reduced during the demodulation at demodulator 216.

The HMC 314 uses the Mid-RF MoCA schema for network data transfer. In the MoCA data scheme, phase responses from MoCA node to node are usually estimated based on preambles of about 13 us. The frequency estimation is based on the header of one or more MAC frame. Without frequency domain phase tracking of each ACMT symbol, the frequency and phase estimation errors, and phase noise degrade the performance of the MoCA network. This degradation can cause packet errors or reduce overall throughput, or both. With the present invention, the frequency estimation errors, phase errors and phase noise will have little impact to the MoCA network data transfer and increase throughput, which provides a more robust network with larger data throughput capacity.

Further, the home network system will suffer interference from other home electronic devices, suffer cable loss and splitter isolation loss and interference from broadcasting signals and signals from portable electronic devices. Such interference degrades the performance of demodulation in the MoCA system. The present invention can be applied to MoCA devices so that the MoCA devices are robust against a variety of interferences.

Currently no combined time domain frequency estimation and decision directed frequency domain phase correction described in the present invention is applied to MoCA devices.

MoCA devices use headers that include short/long sequences and channel estimation sequences to estimate the channel and frequency offset for use by the demodulator 216. The frequency offset can be further estimated by other MoCA frames such as Type I probes. No matter how accurate, there are always some estimation errors. The errors can get larger when the MoCA channels suffer narrow band interference. The frequency estimation is also applied for symbol rate estimation when a single LO is used for frequency and symbol time. The frequency estimation error will introduce symbol rate errors resulting in improper demodulation by demodulator 216.

The residual symbol rate estimation error will accumulate when there are many ACMT symbols in one MoCA frame. Assume the symbol rate estimation is $\Delta$ parts per million (ppm) and the cyclic prefix length is CP. Then after N ACMT symbols, the timing error is (256+CP) N* $\Delta$ samples (20 ns per sample for example). The time domain timing error will cause phase rotation in frequency domain. The phase error in frequency domain is (256+CP)N* $\Delta$*360 degree. The residual frequency estimation error will cause even more phase drift for ACMT symbols.

As an example, if the frequency estimation error is I kHz for a MoCA node operated at 575 MHz, the timing error is 1/575000=1.7391 ppm. If CP=32 and there are 60 ACMT symbols in one MAC frame, the phase error caused by timing error is 10.8 degree for the last ACMT symbol. The phase error introduced by timing error for one ACMT symbol is only 0.18 degree. The 10.8 degree error will significantly degrade the MoCA performance if not corrected. The 1KHz frequency estimation error will cause about 2 degree phase drift for each ACMT symbol. These phase errors need to be corrected for MoCA devices to achieve robust and good performance.

The time domain frequency estimation and frequency domain phase tracking algorithm is described as follows for a MAC frame consisting of N ACMT symbols.

1. Estimate the frequency offset based on the header or headers of MAC frames

2. Estimate the channel based on Channel Estimation Section in the MAC header

3. Based on the frequency/timing offset, correct the phase of each sample before FFT for one ACMT symbol.

4. Set $\Theta = 0$

5. for i=1,2,...,N {

a. Multiply the i-th ACMT symbol by exp($-j\Theta$) to correct the phase errors caused by residual frequency estimation error, timing error and phase noise

b. Assume the i-th ACMT symbol is demodulated as, $t_1^i, t_2^i, \cdots, t_I^i$ which are complex numbers for I bit loaded tones (or bit loaded tones with some predefined constellation density, say at least 16QAM). Since the bit loading for each tone is known for the receiver, a hard decision can be made for $t_1^i, t_2^i, \cdots, t_I^i$. Since the received points and their hard decision are known, the phase errors for the I tones can be calculated

as $\varphi_1^i, \varphi_2^i, \cdots, \varphi_I^i$ (in radian). Calculate the average phase error as

$$\theta_i = \frac{\sum_{k=1}^{I} \varphi_k^i}{I}$$

c. Set $\Theta = \Theta + \theta_i$ }

To further reduce the complexity, the phase correction of Steps 3 and 5 (a) can be combined. The above combined time domain and frequency domain frequency and phase estimation can track the frequency estimation error and phase noise sufficiently to allow longer data frames to be properly demodulated by demodulator 216. However, more sophisticated tracking algorithms, such as first order loop algorithms, can be applied if desired for further improvement of the data throughput. Although the MoCA specification requires the frequency and symbol rate to be driven by the same local oscillator (LO), the present invention can also be applied to cases where the frequency and symbol time are driven by different LOs, when the symbol time drift is small, e.g. 10 ppm.

Throughput Performance with Phase Error Estimation

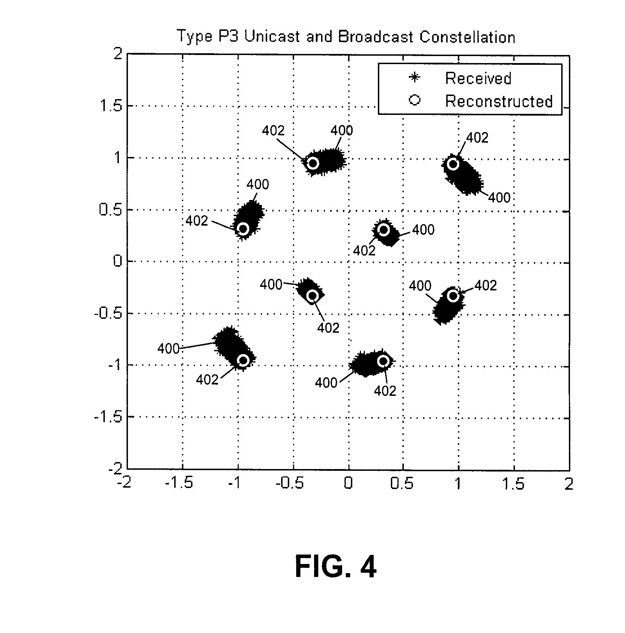

FIG. 4 illustrates demodulation of a constellation of a MAC frame without phase tracking.
For one Type P3 MAC frame of 60 ACMT symbols, when the frequency estimation error is 89 Hz, the constellation is received with phase and frequency errors as shown as received symbols 400. The reconstructed symbols 402 comprise only a portion of the received symbols because of the phase and frequency errors, and thus such a system can only support a given bit rate for the power of the received symbols 400. When higher bit rates are attempted in the constellation, data errors occur, because the phase error approaches 11 degrees, which results in incorrect demodulation of the received symbols 400 into the reconstructed symbols 402.

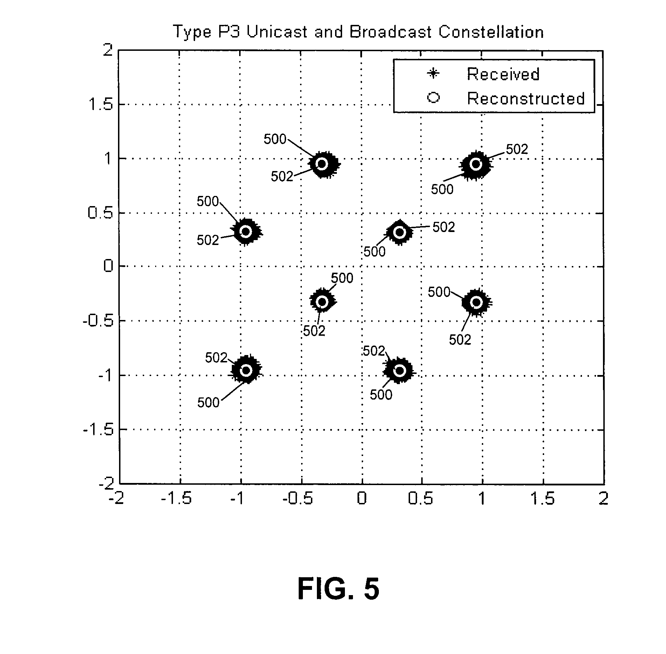

FIG. 5 illustrates demodulation of a constellation of a MAC frame with phase tracking and correction in accordance with one or more embodiments of the present invention.
Received symbols 500 and reconstructed symbols 502 now comprise a lower error rate, even with the same frequency estimation, because the phase noise is tracked and corrected for each subsequent received symbol 500. As such, the errors present in each received symbol 500 are reduced, leading to a more accurate reconstructed symbol 502.

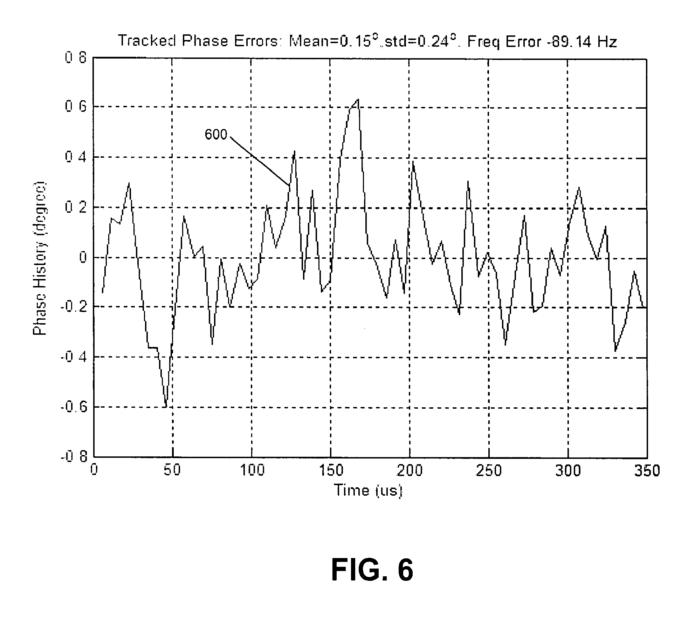

FIG. 6 illustrates the frequency domain phase trajectory in accordance with one or more embodiments of the present invention.
The phase trajectory 600 at a frequency error of 89 Hz (as in FIGS. 4 and 5) shows that the phase noise typically imparts no more than 0.6 degrees of error in each symbol, and only averages a 0.15 degree of error per symbol. However, the present invention's correction of this small error increases the carrier to implementation loss ratio by more than 45 dB, which can support 1024QAM with little degradation.

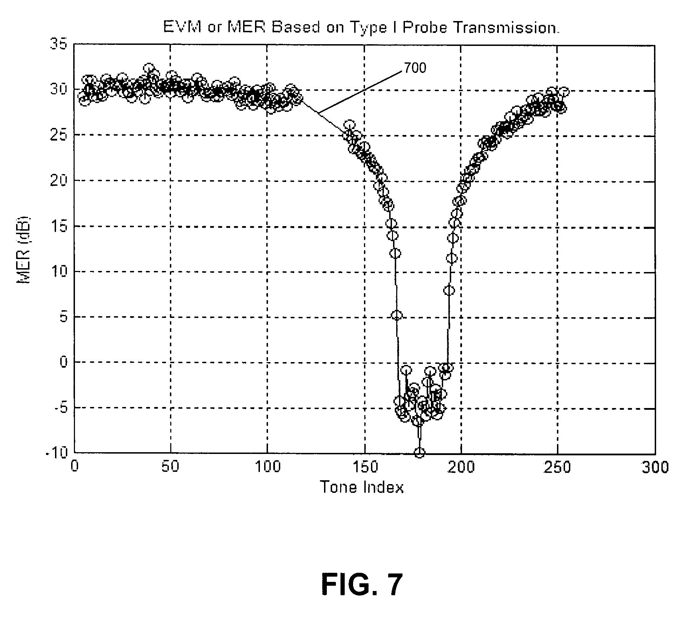

FIG. 7 illustrates an error vector magnitude for individual tones with ACMT phase tracking in accordance with one or more embodiments of the present invention.
Graph 700 illustrates the estimated Error Vector Magnitude (EVM) for the individual tones in the MoCA system. When narrow band interference is present, the frequency estimation for the MoCA channel may have large errors. For example, a Type I frequency domain probe is centered at 550 MHz. A narrow band interference centered at 565 MHz with bandwidth 5.5 MHz is present with power of -5 dBc relative to the MoCA signal. The interference signal is simulated by a QPSK modulated signal with a baud rate of 5 MHz and a roll-off factor of 0.1. The MoCA signal has a frequency offset of 5.50 KHz. The frequency offset estimation of such a system, based on the header, is 6.28 KHz and the error is 0.78 KHz. With phase tracking, the estimated Error Vector Magnitude (EVM) for each tone is shown in FIG 7. Based on the channel quality, when CP=32, the estimated Physical Layer (PHY) data rate is about 205 Mbps. Note that the PHY rate calculation is based on the simulated MER requirement for BPSK to 256QAM with packet error rate requirement to be less than $10^{-7}$ after Reed-Solomon decoding.

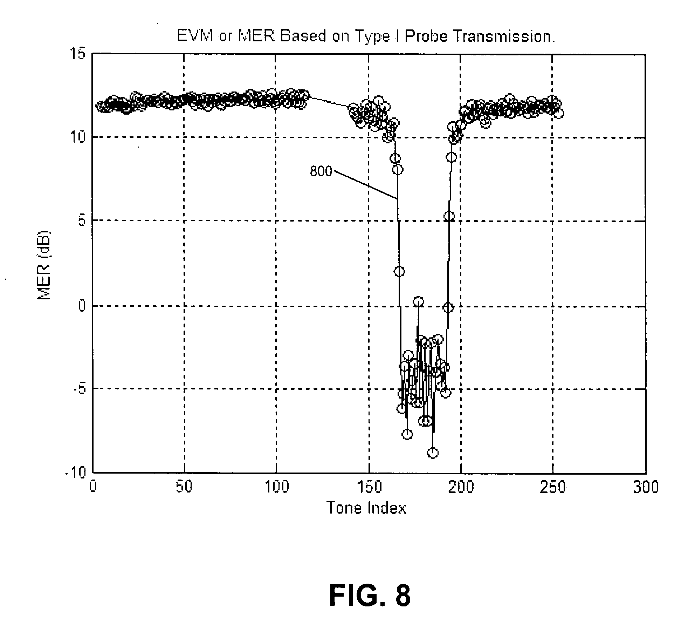

FIG. 8 illustrates an error vector magnitude for individual tones without ACMT phase tracking.
Without phase tracking, graph 800 illustrates the EVM for individual tones in the MoCA system. For MoCA nodes with a signal quality shown in FIG. 8, the node may be removed from the network even though it actually has a physical layer throughput of more than 200 Mbps. For Type I probe signals, the phase errors from all tones are used to demodulate the signal, and the phase errors near the center frequency of interference signal are much larger, thereby corrupting the tones in the MoCA channel of interest to a greater extent than those outside of the bandwidth of an interference signal. For general MoCA packets, since there is no bit loading for the corrupted tones, the phase tracking error will be smaller, and hence the performance is expected to be even better than shown in FIG. 7.

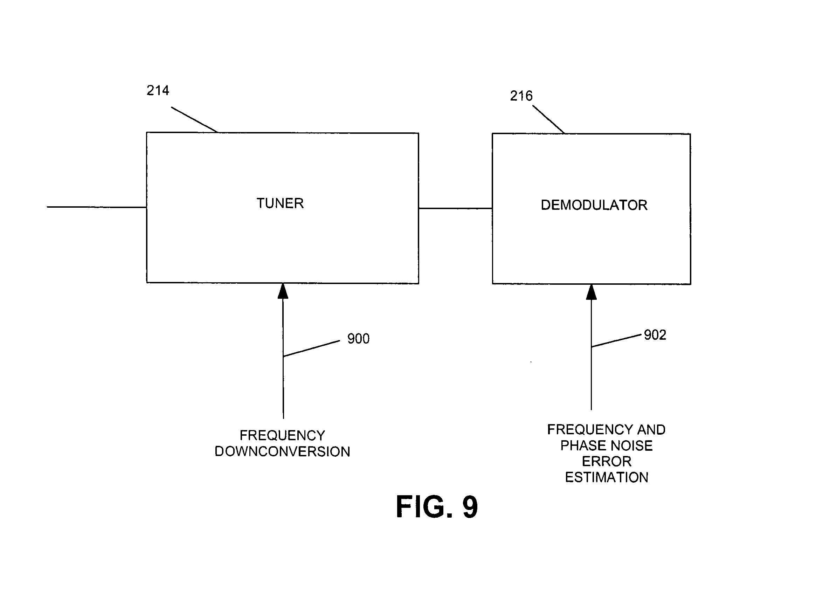

FIG. 9 illustrates the use of tuner, frequency estimation and phase noise estimation in accordance with one or more embodiments of the present invention.
A frequency down conversion 900 is typically entered into the tuner 214, either via an input or control to a local oscillator controlling tuner 214 or another input to tuner 214, to down convert the signal at a given frequency to baseband. Further, the frequency estimation and phase noise estimation 904 are entered into the demodulator 216 such that the demodulator 216 can phase track the signal and properly decode the desired data.

Process Chart

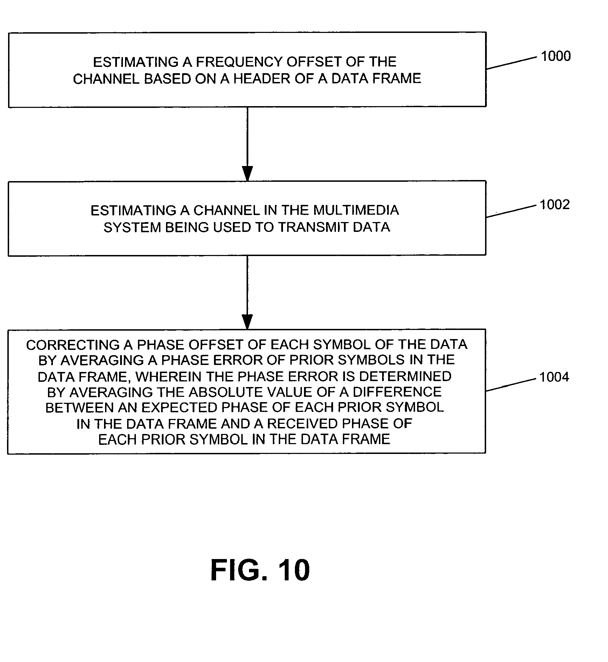

FIG. 10 illustrates a process chart in accordance with one or more embodiments of the present invention.
Box 1000 illustrates estimating a frequency offset of the channel based on a header of a data frame.
Box 1002 illustrates estimating a channel in the multimedia system being used to transmit data.
Box 1004 illustrates correcting a phase offset of each symbol of the data by averaging a phase error of prior symbols in the data frame, wherein the phase error is determined by averaging the absolute value of a difference between an expected phase of each prior symbol in the data frame and a received phase of each prior symbol in the data frame.

Conclusion

This concludes the description of the preferred embodiments of the present invention. The foregoing description of the preferred embodiment of the invention has been presented for the purposes of illustration and description. It is not intended to be exhaustive or to limit the invention to the precise form disclosed. Many modifications and variations are possible in light of the above teaching.
The present invention discloses systems and methods for demodulating signals. A system in accordance with the present invention comprises a frequency estimator, a tuner, coupled to the frequency estimator, for tuning to a frequency based on an estimate from the frequency estimator, a phase offset estimator for determining an average phase offset, and a demodulator, coupled to the tuner and the phase offset estimator, for demodulating the plurality of symbols, wherein the demodulator corrects a phase offset for a given symbol in the plurality of the symbols based on the average phase offset of symbols prior to the given symbol.
Such a system further optionally comprises the system being a Multimedia over Coax Alliance (MoCA) system, the signal being BPSK to up to 1024QAM modulated for some tones or a video signal, and a satellite broadcast system, wherein the satellite broadcast system transmits the signal.
A method for increasing data throughput of a multimedia system in accordance with one or more embodiments of the present invention comprises estimating a channel in the multimedia system being used to transmit data, estimating a frequency offset of the channel based on a header of a data frame, and correcting a phase offset of each symbol of the data by averaging a phase error of prior symbols in the data frame, wherein the phase error is determined by averaging the absolute value of a difference between an expected phase of each prior symbol in the data frame and a received phase of each prior symbol in the data frame.
Such a method further optionally comprises the multimedia system being a Multimedia over Coaxial cable Alliance (MoCA) system, the signal being a Quadrature Amplitude Modulation (QAM) signal, or a video signal, and the multimedia system further comprising a satellite broadcast system, wherein the satellite broadcast system transmits the data.
It is intended that the scope of the invention be limited not by this detailed description, but rather by the claims appended hereto and the equivalents thereof. The above specification, examples and data provide a complete description of the manufacture and use of the composition of the invention. Since many embodiments of the invention can be made without departing from the spirit and scope of the invention, the invention resides in the claims hereinafter appended and the equivalents thereof.

**Claims**

1. A system for demodulating a signal comprising a plurality of symbols, comprising:

   a frequency estimator;
   a tuner, coupled to the frequency estimator, for tuning to a frequency based on an estimate from the frequency estimator;
   a phase offset estimator for determining an average phase offset; and
   a demodulator, coupled to the tuner and the phase offset estimator, for demodulating the plurality of symbols, wherein the demodulator corrects a phase offset for a given symbol in the plurality of the symbols based on the average phase offset of symbols prior to the given symbol.

2. The system of claim 1, wherein the system is a Multimedia over Coax Alliance (MoCA) system.

3. The system of claim 2, wherein the signal comprises a multi-tone Quadrature Amplitude Modulation (QAM) signal.

4. The system of claim 2, wherein the system further comprises a satellite broadcast system, wherein the satellite broadcast system transmits the signal.

5. The system of claim 4, wherein the signal is a video signal.

6. The system of claim 5, wherein the signal is modulated from BPSK to 1024QAM for individual tones.

7. A method for increasing a data throughput rate of a multimedia system, comprising:

   estimating a frequency offset of the channel

tion

based on a header of a data frame;
estimating a channel in the multimedia system being used to transmit data; and
correcting a phase offset of each symbol of the data by averaging a phase error of prior symbols in the data frame, wherein the phase error is determined by averaging the absolute value of a difference between an expected phase of each prior symbol in the data frame and a received phase of each prior symbol in the data frame.

8. The method of claim 7, wherein the multimedia system is a Multimedia over Coax Alliance (MoCA) system.

9. The method of claim 8, wherein the signal is a Quadrature Amplitude Modulation (QAM) signal.

10. The method of claim 8, wherein the multimedia system further comprises a satellite broadcast system, wherein the satellite broadcast system transmits the data.

11. The method of claim 10, wherein the signal is a video signal.

12. The method of claim 11, wherein the signal is a Quadrature Amplitude Modulation (QAM) signal for multi-tones.

9

100

106
106
106

116

118
118
118

104

114

UPLINK DISH

RECEIVER STATION
108A

RECEIVER STATION
108B

RECEIVER STATION
108C

102

TRANSMISSION STATION

110
112

FIG. 1

FIG. 2

EP 2 306 679 A1

**FIG. 3**

FIG. 4

EP 2 306 679 A1

Type P3 Unicast and Broadcast Constellation

FIG. 5

Tracked Phase Errors: Mean=0.15°,std=0.24°, Freq Error -89.14 Hz

FIG. 6

EP 2 306 679 A1

EVM or MER Based on Type I Probe Transmission.

FIG. 7

EP 2 306 679 A1

EVM or MER Based on Type I Probe Transmission.

FIG. 8

EP 2 306 679 A1

214

216

TUNER

DEMODULATOR

900

902

FREQUENCY
DOWNCONVERSION

FREQUENCY AND
PHASE NOISE
ERROR
ESTIMATION

**FIG. 9**

ESTIMATING A FREQUENCY OFFSET OF THE
CHANNEL BASED ON A HEADER OF A DATA FRAME — 1000

ESTIMATING A CHANNEL IN THE MULTIMEDIA
SYSTEM BEING USED TO TRANSMIT DATA — 1002

CORRECTING A PHASE OFFSET OF EACH SYMBOL OF THE DATA
BY AVERAGING A PHASE ERROR OF PRIOR SYMBOLS IN THE
DATA FRAME, WHEREIN THE PHASE ERROR IS DETERMINED
BY AVERAGING THE ABSOLUTE VALUE OF A DIFFERENCE — 1004
BETWEEN AN EXPECTED PHASE OF EACH PRIOR SYMBOL
IN THE DATA FRAME AND A RECEIVED PHASE OF
EACH PRIOR SYMBOL IN THE DATA FRAME

# FIG. 10

**Europäisches Patentamt**
**European Patent Office**
**Office européen des brevets**

# EUROPEAN SEARCH REPORT

Application Number

EP 10 25 1716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/129514 A1 (TWITTO MOSHE [IL]) 21 May 2009 (2009-05-21) * paragraph [0001] - paragraph [0002] * * paragraph [0004] - paragraph [0007] * * paragraph [0009] * * paragraph [0050] * * paragraph [0052] - paragraph [0066] * * paragraph [0074] - paragraph [0077] * ----- | 1-12 | INV. H04L27/00 H04L27/22 H04L27/26 H04L27/38 |
| X | US 2004/071234 A1 (LI WENZHEN [SG]) 15 April 2004 (2004-04-15) * abstract * * paragraph [0001] * * paragraph [0012] * * paragraph [0020] * * paragraph [0043] - paragraph [0046] * * paragraph [0051] * * paragraph [0059] - paragraph [0071] * * figure 3 * ----- | 1-12 | |
| X | US 2007/127611 A1 (CHONG YOUNG-JUN [KR] ET AL) 7 June 2007 (2007-06-07) * paragraph [0011] * * paragraph [0027] - paragraph [0030] * * paragraph [0032] - paragraph [0037] * ----- | 1-12 | TECHNICAL FIELDS SEARCHED (IPC) H04L |
| X | EP 1 734 712 A2 (BROADCOM CORP [US]) 20 December 2006 (2006-12-20) * abstract * * paragraph [0002] * * paragraph [0014] - paragraph [0017] * * paragraph [0029] - paragraph [0030] * * paragraph [0039] - paragraph [0055] * * paragraph [0058] - paragraph [0059] * * paragraph [0063] * ----- -/-- | 1,7 | |

The present search report has been drawn up for all claims

| Place of search | Date of completion of the search | Examiner |
|---|---|---|
| Munich | 21 February 2011 | Palacián Lisa, Marta |

EPO FORM 1503 03.82 (P04C01)

Europäisches
Patentamt

European
Patent Office

Office européen
des brevets

**EUROPEAN SEARCH REPORT**

Application Number

EP 10 25 1716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOUGEARD S ET AL: "PERFORMANCE OPTIMIZATION OF HIGH ORDER QAM IN PRESENCE OF PHASE NOISE AND AWGN: APPLICATION TO A DECISION DIRECTED FREQUENCY SYNCHRONIZATION SYSTEM", WIRELESS PERSONAL COMMUNICATIONS, SPRINGER, DORDRECHT, NL, vol. 37, no. 1/02, 1 April 2006 (2006-04-01), pages 123-138, XP001501676, ISSN: 0929-6212, DOI: DOI:10.1007/S11277-006-8863-X * abstract * * 1. Introduction 3. The considered carrier recovery system Figure 2 * ----- | 1,4,5,7, 10,11 | |
| | | | **TECHNICAL FIELDS SEARCHED (IPC)** |

The present search report has been drawn up for all claims

| Place of search | Date of completion of the search | Examiner |
|---|---|---|
| Munich | 21 February 2011 | Palacián Lisa, Marta |

EPO FORM 1503 03.82 (P04C01)

# EP 2 306 679 A1

## ANNEX TO THE EUROPEAN SEARCH REPORT
## ON EUROPEAN PATENT APPLICATION NO.

EP 10 25 1716

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2011

| Patent document cited in search report | | Publication date | Patent family member(s) | | Publication date |
|---|---|---|---|---|---|
| US 2009129514 | A1 | 21-05-2009 | NONE | | |
| US 2004071234 | A1 | 15-04-2004 | SG | 108861 A1 | 28-02-2005 |
| US 2007127611 | A1 | 07-06-2007 | NONE | | |
| EP 1734712 | A2 | 20-12-2006 | US | 2007002981 A1 | 04-01-2007 |
| | | | US | 2007140212 A1 | 21-06-2007 |